# EUROPEAN PATENT APPLICATION

(11) **EP 4 510 296 A1**
(43) Date of publication of application: **19.02.2025**
(21) Application number: 24787399.5
(22) Date of filing: 28.06.2024
(51) Int. Cl.: H01M 10/42, H01M 50/244, H01M 50/251, H01M 50/342

(54) **ENERGY STORAGE SYSTEM**

(30) Priority: 30.06.2023 CN 202321721289 U
(71) Applicant: Eve Energy Storage Co., Ltd, Wuhan, Hubei 430074 (CN)
(72) Inventor: PANG, Yuncong, Wuhan, Hubei 430074 (CN); ZOU, Yulang, Wuhan, Hubei 430074 (CN); LIANG, Weijian, Wuhan, Hubei 430074 (CN); ZHAO, Zihui, Wuhan, Hubei 430074 (CN); YI, Haohao, Wuhan, Hubei 430074 (CN)
(74) Representative: Murgitroyd & Company
(86) International application number: PCT/CN2024/102563
(87) International publication number: WO 2025/002406

(57) **Abstract**

The application provides an energy storage system including: battery packs; an energy storage cabinet, which includes a cabinet body whose containment compartment includes a battery compartment installed with the plurality of battery packs; firefighting equipment, which includes a first aerosol firefighting device, second aerosol firefighting devices, an explosion-proof plate, and a water firefighting device; wherein, the first aerosol firefighting device is installed in the energy storage cabinet; the second aerosol firefighting devices each are installed on a corresponding one of the battery packs; the explosion-proof plate surrounds the battery compartment; and the water firefighting device is configured to spray water into the battery compartment.

## Description

This application claims priority to Chinese Patent Application No. 202321721289.7, filed on June 30, 2023, the content of all of which is incorporated herein by reference in its entirety.

### TECHNICAL FIELD

The present application relates to energy storage technology, and specifically to an energy storage system.

### BACKGROUND

New energy projects represented by photovoltaic and wind power are booming. With a large amount of photovoltaic and wind power being integrated into the power grid, there is a sharp increase in the demand for grid resources such as frequency modulation and peak shaving. The role of energy storage systems in solving the waste of grid electricity, enhancing the stability of the grid, and improving the utilization efficiency of the power distribution system is becoming increasingly important.

In the related art, the use of compact outdoor cabinet systems, compared to large-scale energy storage containers, can avoid the weight restrictions for foreign transportation. They can be transported as a whole to the site and integrated into the cabinet, and can start working when directly connected to the customer's equipment.

### SUMMARY

In the related art, an outdoor cabinet system generally uses air-cooled energy storage for heat dissipation, which has a low cooling efficiency and is affected by the ambient temperature in summer, making it impossible to maintain the temperature inside the battery pack at the most suitable temperature. This leads to a decline in the overall performance of the system, difficulty in controlling the temperature difference within the system, and an increased risk of short circuit fires. In addition, the battery pack uses fire extinguishing agents for fire protection. Due to the air-cooled heat dissipation mechanism of the battery pack, it is difficult for the fire extinguishing agents to stay inside the battery pack for a long time to extinguish fires and prevent secondary re-ignition. Moreover, the air-cooled energy storage system is susceptible to environmental factors such as sand, rain, or insects over long periods of operation, posing a potential risk of short circuit.

The embodiment of this application provides an energy storage system including:
a plurality of battery packs arranged in a direction;
an energy storage cabinet comprising a cabinet body, wherein the cabinet body comprises a containment compartment, the containment compartment comprises a battery compartment installed with the plurality of the battery packs;
a firefighting equipment comprising a first aerosol firefighting device, second aerosol firefighting devices, an explosion-proof plate, and a water firefighting device;
wherein, the first aerosol firefighting device is installed in the energy storage cabinet; each second aerosol firefighting device is installed on a corresponding one of the battery packs; the explosion-proof plate is disposed as at least part of the battery compartment; the water firefighting device is installed in the energy storage cabinet and is configured to spray water into the battery compartment.

### BENEFICIAL EFFECTS

The energy storage system provided by the present application, by setting the second aerosol firefighting device on the battery pack, controls the fire situation that causes ignition and explosion in a timely manner when the battery pack is thermally out of control and diffused, which is the first level of safety design. Furthermore, by setting the first aerosol firefighting device inside the energy storage cabinet, it is possible to prevent the spread of the fire to the battery compartment or the internal system wiring of the cabinet as much as possible, which is the second level of safety design. By setting the explosion-proof plate in the battery compartment, when the internal gas pressure of the battery compartment reaches the bursting pressure of the explosion-proof plate due to a large amount of gas generated by one or more thermally out-of-control battery packs, the explosion-proof plate bursts instantaneously, releasing the internal pressure of the battery compartment, preventing the fragments caused by the cabinet body explosion due to excessive pressure from hurting people, while the water firefighting device sprays water into the battery compartment to extinguish the battery pack, which is the third level of safety design. This improves the shortcomings of the low reliability of firefighting equipment in the related technology and improves the effectiveness of firefighting equipment.

### BRIEF DESCRIPTION OF THE DRAWINGS

Figure 1 is a schematic diagram of the overall structure provided by the embodiment of the present application;
Figure 2 is a schematic diagram of the battery pack provided by the embodiment of the present application;
Figure 3 is a top view provided by the embodiment of the present application;
Figure 4 is a side view provided by the embodiment of the present application;
Figure 5 is an enlarged view of section A in Figure 4;
Figure 6 is a schematic diagram of the cooling pipeline provided by the embodiment of the present application;
Figure 7 is a bottom view provided by the embodiment of the present application.

### Drawing references:

1: Battery pack; 11: Cooling plate; 12: Cover; 13: Compartment; 2: Energy storage cabinet; 21: Cabinet body; 211: Partition; 212: Top plate; 2121: Top plate; 213: Bottom plate; 2131: Slot; 2132: Fixing hole; 2133: Drainage hole; 214: Side plate; 215: Cable installation plate; 22: First cabinet door; 23: Second cabinet door; 24: Containment compartment; 241: Battery compartment; 242: Electrical compartment; 25: Sandwich layer; 3: Firefighting equipment; 31: First aerosol firefighting device; 311: First smoke detector; 312: First aerosol fire extinguisher; 32: Second aerosol firefighting device; 33: Explosion-proof plate; 34: Water firefighting device; 341: First water firefighting pipeline; 4: Cooling pipeline; 41: First pipeline assembly; 411: First pipeline; 412: Three-way valve; 413: First connecting pipe; 42: Second pipeline assembly; 421: Second pipeline; 422: Wall-penetrating connector; 423: Second connecting pipe; 43: Drain valve; 5: Cooling device; 6: High-voltage box.

### DETAILED DESCRIPTION

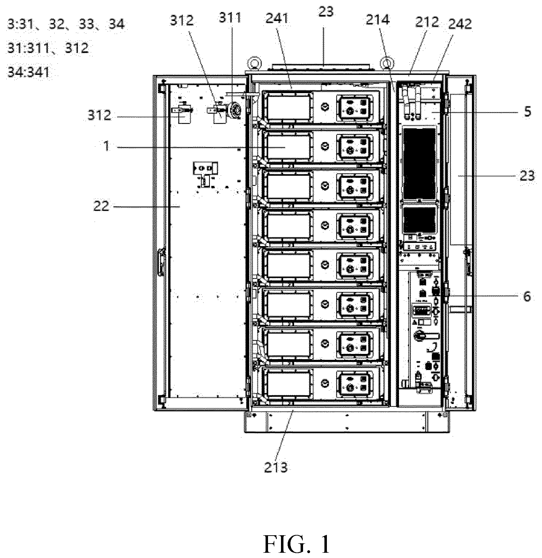

Referring to Figure 1, the embodiment of this application provides an energy storage system.

The energy storage system includes a plurality of battery packs 1, an energy storage cabinet 2, and firefighting equipment 3.

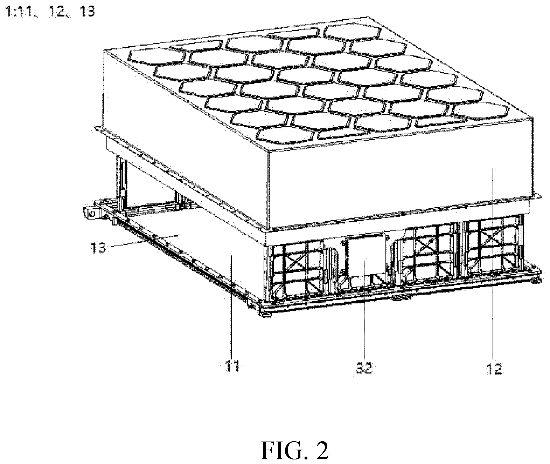

Referring to Figure 2, each battery pack 1 includes a plurality of battery groups, a cooling plate 11, and a cover 12. The battery packs 1 each can be a square battery pack, and have a waterproof level of IP67. the cover 12 includes a support and an upper cover disposed on the support, the cooling plate 11 is installed on the support, and the cover 12 and the cooling plate 11 form a compartment 13 for installing the plurality of battery groups. The cooling plate 11 is in contact with the plurality of battery groups to dissipate heat.

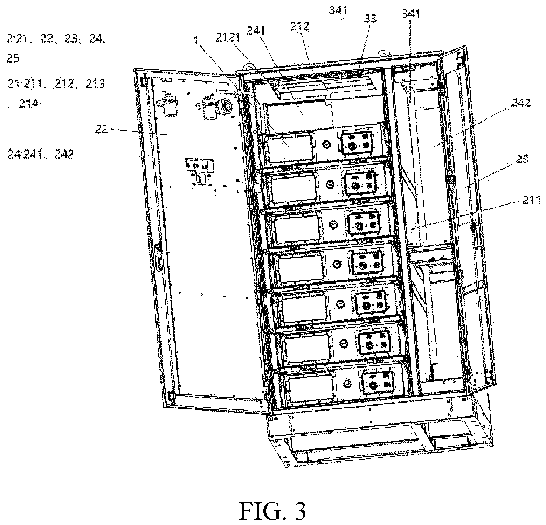

Referring to Figure 3, the energy storage cabinet 2 includes a cabinet body 21, a first cabinet door 22, and a second cabinet door 23. The cabinet body 21 includes a partition 211, a top plate 212 and a bottom plate 213 disposed oppositely, a back plate, and two oppositely disposed side plates 214. The two side plates 214 are connected between the top plate 212 and the bottom plate 213, and the two side plates 214, the top plate 212, the back plate, and the bottom plate 213 form a containment compartment 24. The partition 211 is connected between the top plate 212 and the bottom plate 213 and divides the containment compartment 24 into a battery compartment 241 and an electrical compartment 242. The plurality of battery packs 1 are installed in the battery compartment 241 and arranged vertically. The first cabinet door 22 and the second cabinet door 23 are respectively hinged to the two side plates 214, the first cabinet door 22 is used to cover the battery compartment 241, and the second cabinet door 23 is used to cover the electrical compartment 242.

The surfaces of the cabinet body 21, the first cabinet door 22, and the second cabinet door 23 are coated from the inside out with an anti-corrosion layer and a wear-resistant layer. The anti-corrosion layer is made by applying epoxy primer to achieve an anti-corrosion grade of C5H, and the wear-resistant layer is made by applying polyurethane flour. Before coating the anti-corrosion layer, the surfaces of the cabinet body 21, the first cabinet door 22, and the second cabinet door 23 are treated by electrophoresis. The top plate 212, the side plates 214, and the bottom plate 213 all have rock wool inside, which has fireproof and insulation effects.

In this embodiment, the dimensions of the cabinet body 21 are 1300×1300×2300mm in length, width, and height, respectively, making the footprint of the load-bearing base 1.69m², greatly improving the energy density per unit area of the energy storage system.

Referring to Figure 1 and Figure 3, the firefighting equipment 3 includes a first aerosol firefighting device 31, second aerosol firefighting devices 32, an explosion-proof plate 33, and a water firefighting device 34.

The first aerosol firefighting device 31 includes a first smoke detector 311 and two first aerosol fire extinguishers 312. The first smoke detector 311 and the two first aerosol fire extinguishers 312 are all installed on the first cabinet door 22, and they all correspond to the topmost battery pack 1 among the plurality of battery packs 1. When the first smoke detector 311 detects a fire in the battery compartment 241, it controls the first aerosol fire extinguisher 312 to spray aerosol. Since the sprayed aerosol has a sinking trend and corresponds to the topmost battery pack 1, it can fill the entire battery compartment 241 in a short time, improving the timeliness and effectiveness of fire extinguishing.

Referring to Figure 2, each second aerosol firefighting device 32 is located in the compartment 13 and is installed on the support of a corresponding battery pack 1. Each second aerosol firefighting device 32 includes a second smoke detector and a second aerosol fire extinguisher. When the second smoke detector detects a fire in some battery pack 1, it controls the second aerosol fire extinguisher to extinguish the fire inside the battery pack 1. This is the first safety design. The first aerosol firefighting device 31 is the second safety design.

Referring to Figure 3, the top plate 212 has an installation hole 2121 located above the topmost battery pack 1, and the explosion-proof plate 33 is screwed onto the installation hole 2121. When one or more battery packs 1 experience thermal runaway and generate a large amount of gas to an extent causing the explosion-proof plate 33 to burst, the explosion-proof plate 33 bursts instantaneously to release the internal pressure of the battery compartment 241, preventing, as much as possible, the containment compartment 24 from exploding under excessive pressure, and no resulted fragment hurts people.

The water firefighting device 34 includes a fire extinguishing water tank and a first water firefighting pipeline 341. The fire extinguishing water tank is installed in the electrical compartment 242 and stores deionized water. The first water firefighting pipeline 341 is connected to and in communication with the fire extinguishing water tank and extends through the partition 211 into the battery compartment 241. The part of the first water firefighting pipeline 341 in the battery compartment is located above the topmost battery pack 1. At the same time when the explosion-proof plate 33 bursts instantaneously to release the internal pressure of the battery compartment 241, the first water firefighting pipeline irrigates a large amount of deionized water to immerse the battery pack 1 and the interior of the battery pack 1, causing the stop of the battery group thermal runaway and cool-down, preventing the battery pack 1 from re-igniting. This is the third safety design.

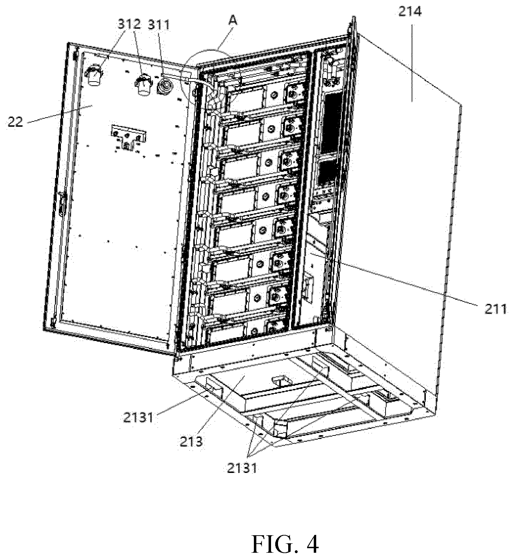

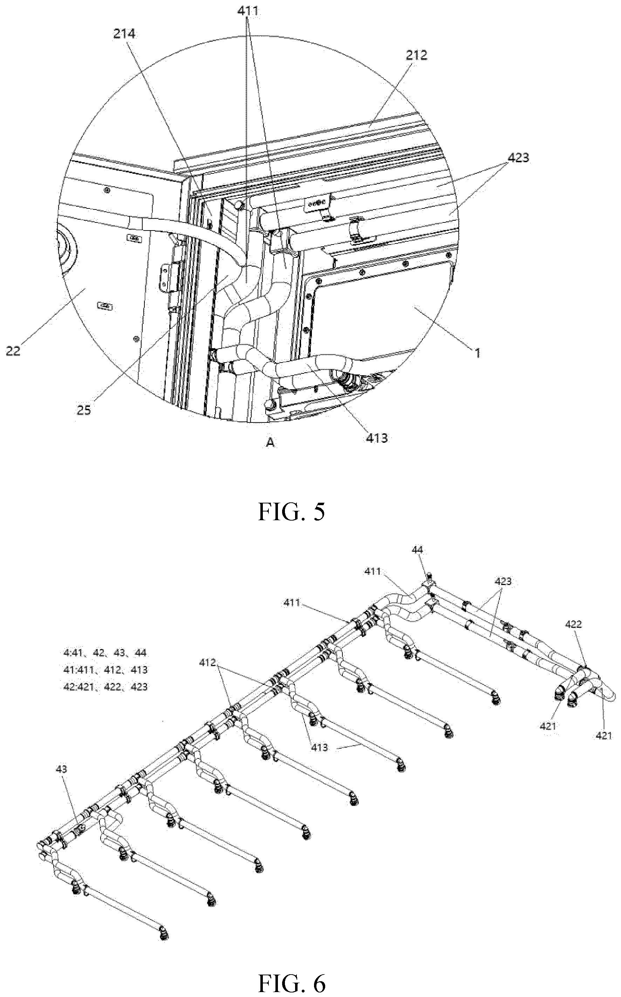

Referring to Figures 4, 5, and 6, the energy storage system also includes a cooling pipeline 4 and a cooling device 5 installed in the electrical compartment 242. The cooling pipeline 4 includes an inlet pipeline and an outlet pipeline. Both the inlet and outlet pipelines include interconnected first and second pipeline assemblies 41 and 42. The first pipeline assembly 41 includes a plurality of first pipelines 411, a plurality of three-way valves 412, and a plurality of first connecting pipes 413. The second pipeline assembly 42 includes a second pipeline 421, a wall-penetrating connector 422, and a second connecting pipe 423.

In the outlet pipeline, the second pipeline 421 connects to the outlet of the cooling device 5, the partition 211 has an installation hole, the wall-penetrating connector 422 is installed in the installation hole, and the sealing performance of the wall-penetrating connector 422 complies with IP66. The second connecting pipe 423 connects to one of the first pipelines 411. Each three-way valve 412 connects between adjacent first pipelines 411 and the first connecting pipes 413, and each first connecting pipe 413 connects to the inlet of the cooling plate 11 of a corresponding one of the battery packs 1. The plurality of three-way valves 412 include a plurality of first three-way valves 412 and a plurality of second three-way valves 412, the inner diameter of each first three-way valve 412 is smaller than the inner diameter of each second three-way valve 412, the plurality of first three-way valves 412 are located above the plurality of second three-way valves 412. In this embodiment, there are eight three-way valves 412 in each outlet pipeline, from top to bottom. The inner diameter of the first three of the three-way valves 412 is 8mm, and that of the remaining five is 12mm. This design aims to balance the cooling fluid flows through the cooling plates 11 of the battery packs 1 as much as possible.

A drain valve 43 is installed on the first pipelines 411, and a self-sealing joint is provided at the end of each first connecting pipe 413 connected to the inlet of the corresponding cooling plate 11, facilitating later maintenance by personnel.

In the inlet pipeline, the second pipeline 421 is connected to the inlet of the cooling device 5, the partition 211 has an installation hole, the wall-penetrating connector 422 is installed in the installation hole, and the sealing performance of the wall-penetrating connector 422 complies with IP66. The second connecting pipe 423 connects to one of the first pipelines 411. Each three-way valve 412 connects between adjacent first pipelines 411 and an adjacent one of the first connecting pipes 413, and each first connecting pipe 413 connects to the outlet of the cooling plate 11 of the corresponding battery pack 1.

In this embodiment, there are eight three-way valves 412 in each of the inlet and outlet pipelines, from top to bottom. In the inlet pipelines, the inner diameter of the first three three-way valves 412 is 8mm, and that of the remaining five is 12mm. This design aims to balance the cooling fluid flows through the cooling plates 11 of the battery packs 1 as much as possible.

In the inlet pipelines, an air drain valve 44 is installed on the first pipeline 411, and a self-sealing joint is provided at the end of each first connecting pipe 413 connected to the inlet of the corresponding cooling plate 11, facilitating later maintenance by personnel.

The side plate 214 near the battery compartment 241 is provided with a sandwich layer 25, and part of the first pipelines 411, the three-way valves 412, and part of the second pipeline 421 are located within the sandwich layer 25. This design saves space and improves the utilization rate of space.

The cooling device 5 includes a cooling liquid tank for storing cooling liquid and a pump station. The cooling liquid tank is connected to and in communication with the second pipeline 421, and the pump station is used to pump the cooling liquid into the second pipeline 421 of the outlet pipeline.

The electrical compartment 242 is equipped with a high-voltage box 6 connected to the plurality of battery packs 1. In the cases where the high-voltage box 6 is equipped with a thermostat and a high-voltage circuit breaker, the thermostat controls the battery packs 1 to disconnect when it detects that the internal temperature of the cabinet 21 exceeds the set temperature; And when the high-voltage circuit breaker detects that the voltage exceeds the set voltage, it controls the battery pack 1 to stop power supply.

In this embodiment, the electrical components of the high-voltage box 6 and the battery packs 11 are suitable for use in areas below 4000m in altitude.

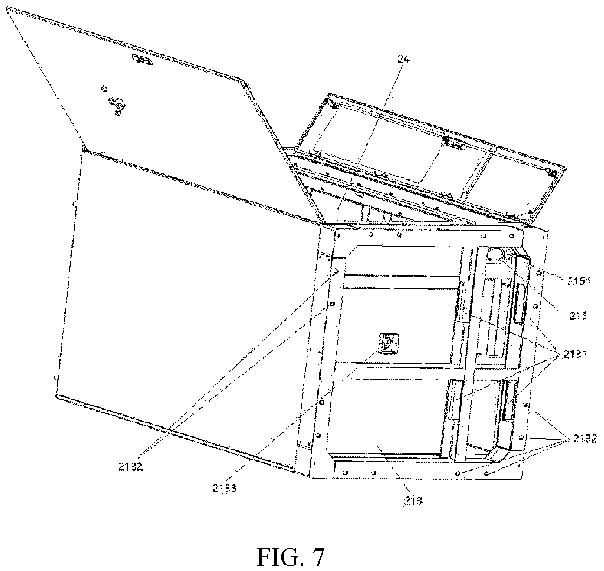

Referring to Figures 4 and 7, the bottom plate 213 has fixing holes 2132, a drainage hole 2133, and a plurality of slots 2131 arranged horizontally. The wall of each fixing hole 2132 is threaded, and the fixing holes 2132 are used to fix the bottom plate 213 to the foundation to improve the installation stability of the energy storage cabinet 2. The drainage hole 2133 is equipped with a check valve, which only allows the liquid inside the energy storage cabinet 2 to flow out. The slots 2131 are for receiving the forks of a forklift, facilitating flexible movement of the energy storage cabinet 2. The bottom plate 213 also has a cable installation plate 215 surrounding the electrical compartment 242, and the cable installation plate 215 has a wiring hole 2151. The wiring hole 2151 is for external wires to extend into the electrical compartment 242 and connect with the high-voltage box 6.

## Claims

1. An energy storage system comprising:
a plurality of battery packs (1) arranged in a direction;
an energy storage cabinet (2) comprising a cabinet body (21), **characterized in that** the cabinet body (21) comprises a containment compartment (24), the containment compartment (24) comprises a battery compartment (241) installed with the plurality of the battery packs (1);
a firefighting equipment (3) comprising a first aerosol firefighting device (31), second aerosol firefighting devices (32), an explosion-proof plate (33), and a water firefighting device (34);
**characterized in that** the first aerosol firefighting device (31) is installed in the energy storage cabinet (2); each second aerosol firefighting device (32) is installed on a corresponding one of the battery packs (1); the explosion-proof plate (33) is disposed as at least part of the battery compartment (241); the water firefighting device (34) is installed in the energy storage cabinet (2) and is configured to spray water into the battery compartment (241).

2. The energy storage system according to claim 1, **characterized in that** the energy storage cabinet (2) further comprises a first cabinet door (22), the first cabinet door (22) is installed on one side of the cabinet body (21) and is disposed to cover the battery compartment (241), the first aerosol firefighting device (31) is installed on a side of the first cabinet door (22) facing the battery compartment (241).

3. The energy storage system according to claim 2, **characterized in that** the first aerosol firefighting device (31) corresponds to the topmost battery pack (1) among the plurality of battery packs (1).

4. The energy storage system according to claim 1, **characterized in that** the water firefighting device (34) comprises a first water firefighting pipeline (341), and the first water firefighting pipeline (341) is located above a topmost battery pack (1) among the plurality of battery packs (1).

5. The energy storage system according to claim 1, **characterized in that** each battery pack (1) comprises a battery group, a cooling plate (11), and a cover (12); the cover (12) and the cooling plate (11) form a compartment (13) for installation of the battery group, and the second aerosol firefighting device (32) corresponding to the battery pack (1) is installed on the cover (12) and is located within the compartment (13).

6. The energy storage system according to claim 1, **characterized in that** the cabinet body (21) comprises a bottom plate (213) opposite to the explosion-proof plate (33) and two oppositely disposed side plates (214), the two side plates (214) are connected between the explosion-proof plate (33) and the bottom plate (213), and the two side plates (214), the explosion-proof plate (33), and the bottom plate (213) form the containment compartment (24).

7. The energy storage system according to claim 6, **characterized in that** the cabinet body (21) comprises a top plate (212) opposite to the bottom plate (213), and the explosion-proof plate (33) is installed on the top plate (212).

8. The energy storage system according to claim 5, further comprising a cooling pipeline (4) and a cooling device (5); the cooling pipeline (4) comprises an inlet pipeline and an outlet pipeline, the inlet pipeline is connected between an inlet of the cooling device (5) and outlets of the cooling plates (11) of the plurality of the battery packs (1), and the outlet pipeline is connected between an outlet of the cooling device (5) and inlets of the cooling plates (11) of the plurality of the battery packs (1).

9. The energy storage system according to claim 8, **characterized in that** at least part of the inlet pipeline and part of the outlet pipeline are located within a wall of the containment compartment (24).

10. The energy storage system according to claim 9, **characterized in that** the inlet pipeline or the outlet pipeline comprises interconnected first pipeline assembly (41) and second pipeline assembly (42), the first pipeline assembly (41) is connected to the cooling plates (11) of the plurality of the battery packs (1), the second pipeline assembly (42) is connected to the cooling device (5), the cabinet body (21) comprises two oppositely disposed side plates (214), and at least part of the first pipeline assembly (41) is located within one of the side plates (214).

11. The energy storage system according to claim 10, **characterized in that** the first pipeline assembly (41) comprises a plurality of first pipelines (411), a plurality of three-way valves (412), and a plurality of first connecting pipes (413), the plurality of the first pipelines (411) are connected between the outlets or the inlets of the cooling plates (11) and the second pipeline assembly (42), each three-way valve (412) is connected between two adjacent ones of the first pipelines (411) and a corresponding one of the first connecting pipes (413), each of the first connecting pipes (413) is further connected to the outlet or inlet of the cooling plate (11) of a corresponding one of the battery packs (1); the plurality of the three-way valves (412) comprise a plurality of first three-way valves (412) and a plurality of second three-way valves (412), an inner diameter of the first three-way valves (412) is smaller than an inner diameter of the second three-way valves (412), and the plurality of the first three-way valves (412) are located above the plurality of the second three-way valves (412).

12. The energy storage system according to claim 10, **characterized in that** the containment compartment (24) further comprises an electrical compartment (242), the cooling device (5) is installed inside the electrical compartment (242); the cabinet body (21) further comprises a partition (211) between the two side plates (214), the partition (211) separates the electrical compartment (242) and the battery compartment (241), and has an installation hole; the second pipeline assembly (42) comprises a second pipeline (421), a wall-penetrating connector (422), and a second connecting pipe (423) connected in sequence, the second pipeline (421) is further connected to the first pipeline assembly (41) and is located inside the battery compartment (241), the wall-penetrating connector (422) is installed in the installation hole, and the second connecting pipe (423) is further connected to the cooling device (5).

13. The energy storage system according to claim 6, **characterized in that** the bottom plate (213) has fixing holes (2132), a drainage hole (2133), and slots (2131), the fixing holes (2132) are configured to fix the bottom plate (213) to a foundation, the drainage hole (2133) is connected to and in communication with the battery compartment (241), and
the drainage hole (2133) has a check valve, the check valve allows liquid inside the energy storage cabinet (2) to flow out, and the slots (2131) are configured for receiving forks of a forklift.

14. The energy storage system according to claim 6, **characterized in that** the containment compartment (24) further comprises an electrical compartment (242), the cabinet body (21) also comprises a partition (211) between the two side plates (214), the partition (211) separates the electrical compartment (242) and the battery compartment (241), the bottom plate (213) comprises a cable installation plate (215) surrounding the electrical compartment (242), the cable installation plate (215) has a wiring hole (2151), the electrical compartment (242) has a high-voltage box (6) inside connected to the plurality of battery packs (1), and the wiring hole (2151) is configured for a connection between external wires with the high-voltage box (6).

15. The energy storage system according to any one of claims 1-14, **characterized in that** the first aerosol firefighting device (31) or each second aerosol firefighting device (32) comprises a smoke detector (311) and at least one aerosol fire extinguisher (312), and the smoke detector (311) is configured to monitor fires and control the at least one aerosol fire extinguisher (312) to activate fire extinguishing.
